# EUROPÄISCHE PATENTSCHRIFT

(11) **EP 2 811 201 B1**
(45) Veröffentlichungstag und Bekanntmachung des Hinweises auf die Patenterteilung: **27.02.2019**
(21) Anmeldenummer: 14159003.4
(22) Anmeldetag: 12.03.2014
(51) Int. Cl.: F16G 5/08

(54) **Antriebsriemen mit Rückenprofil**
Drive belt having profiled back surface
Courroie d'entraînement avec un dos profilé

(30) Priorität: 24.05.2013 DE 102013105333
(43) Veröffentlichungstag der Anmeldung: 10.12.2014
(73) Patentinhaber: ContiTech Antriebssysteme GmbH, 30165 Hannover (DE)
(72) Erfinder: Kanzow, Henning, 30419 Hannover (DE); Moses, Reinhold, 37632 Eimen (DE)
(74) Vertreter: Kilsch, Armin Ralph

(56) Entgegenhaltungen:
- EP-A1- 0 859 166
- DE-C1- 19 649 931
- US-A- 2 548 135

## Beschreibung

Die Erfindung betrifft einen kraftübertragender Antriebsriemen aus Elastomermaterial mit eingebetteten Zugträgern, einer ggf. profilierten und für die Kraftübertragung auf komplementär ausgeformte Riemenscheiben ausgebildeten Antriebsseite und einem der Antriebsseite gegenüberliegenden im Wesentlichen glatten Rücken.

Kraftübertragende, endlose Antriebsriemen werden werden mit unterschiedlichsten Profilen auf ihrer Antriebsseite hergestellt, beispielsweise als Keilrippenriemen (KRR) und sind in einer Vielzahl von Ausführungen bekannt. Keilrippenriemen werden zum Beispiel in ihren wesentlichen Ausbildungen und Maßen u.a. in der DIN 7867 normiert.

In einer Reihe von Anwendungsfällen werden nicht nur über der Antriebsseite des Antriebsriemens Aggregate angetrieben, die auf ihrer Antriebswelle entsprechend ausgeformte Riemenscheiben ausweisen, sondern auch über den entsprechend umgelenkten und auf glatte Riemenscheiben wirkenden Riemenrücken. Die ist z. B. oft bei einem Zahnriementrieb/Keilrippenriementrieb in einem KFZ-Motor der Fall, bei dem der Antrieb der Wasserpumpe als Nebenaggregat über den glatten Riemenrücken erfolgen kann.

Bei solchen Lösungen ergeben sich oft Nachteile dadurch, dass die Kraftübertragung über den Riemenrücken schwanken kann. So ergibt sich z. B. eine starke Verringerung der Übertragungsleistung bei Nässe oder Feuchtigkeit.

Im Stand der Technik gibt es Lösungen, die diese Nachteile verringern sollen. Bekannt ist es, ein Rillenmuster aus vielen um 45° geneigten Rillen auf der Rückenopberfläche auszubilden. Dadurch verringert sich aber der Gummikontakt zur Scheibe auf weniger als 40% der nutzbaren Oberfläche, so dass in trockenem, normalem Zustand eine verringerte Übertragungsleistung und eine eingeschränkte Abriebbeständigkeit bemerkbar sind. Gleiche Nachteile ergeben sich mit einem strukturierten Rücken durch etwa einen positiven oder negativen Gewebeabdruck oder auch bei gummiertem Gewebe auf der Rückenoberfläche. Letzteres weist auch eine geringere Fähigkeit zur Kraftübertragung bei Nässe auf.

Eine weitere bekannte Ausführung besteht darin, auch auf dem Riemenrücken Rippen auszubilden und die entsprechenden Scheiben ebenfalls zu profilieren. Es ergibt sich damit zwar eine sehr gute Übertragungsleistung, aber Scheibe und Riemen sind aufwendig herzustellen und daher deutlich teurer.

DE19649931C1, US2548135 und EP0859166 offenbaren Antriebsriemen gemäß des Oberbegriffs des Anspruchs 1.

Für die Erfindung bestand also die Aufgabe, einen Antriebsriemen bereitzustellen, der auch bei Feuchtigkeit oder Nässe eine ausreichend hohe Kraftübertragung über den Riemenrücken aufweist, also ein hohes Drehmoment mit nur geringem Schlupf übertragen kann, der keinen nennenswerten Verschleiß erzeugt und der einfach herzustellen ist..

Gelöst wird diese Aufgabe durch die Merkmale des Hauptanspruchs. Weitere vorteilhafte Ausbildungen sind in den Unteransprüchen offenbart.

Dabei ist der Rücken des Antriebsriemens mit wasserableitenden Profilrillen ausgebildet, welche im Wesentlichen in Längsrichtung des Antriebsriemens ausgerichtet sind, und eine Tiefe zwischen 0,2 und 0,7 mm aufweisen. Die Rillen sind damit nicht zu tief ausgebildet, wodurch vermieden wird, dass der Riemen sich im Betrieb sich evtl. spaltet.

Aus der Entwicklung von KFZ-Reifen ist zwar bekannt, dass Längsrillen mit einer Tiefe von mindestens 1,6 mm im Reifenprofil ein Aquaplaning auf der Straße verringern können, ein Einsatz bei Riementrieben wurde aber aufgrund der unterschiedlichen Umschlingungsverhältnisse / Kontaktflächen, Wechselbiegung bei Riemen und der grundsätzlich unterschiedlichen Werkstoff- und Reibungspaarung nicht in Erwägung gezogen. Überraschenderweise zeigt sich durch die erfindungsgemäße Ausbildung des Antriebsriemens, insbesondere in der Kombination mit einer angepassten Ausrichtung und Tiefe der wasserableitenden Profilrillen auf der Riemenrückenseite, dass eine hohe Kraftübertragung durch den Riemenrücken auch bei Feuchtigkeit oder Nässe erfolgen kann.

Eine vorteilhafte Weiterbildung besteht darin, dass die wasserableitenden Profilrillen zwischen 5 und 30 % der Oberfläche des glatten Rückens einnehmen. Die Rillen verringern damit die die Auflagefläche im Vergleich zum glatten Riemen nur geringfügig (nur 5- 30 % der Rückenfläche sind Rillen). Durch die so verbleibende große Kontaktfläche wird der Verschleiß minimiert und die Obertragbare Leistung maximiert. Dies wird verstärkt durch eine weitere vorteilhafte Ausbildung, die darin besteht, dass die wasserableitenden Profilrillen ein Verhältnis von Länge zu Breite von größer als 10 aufweisen, vorzugsweise größer als 20.

Eine weitere vorteilhafte Ausbildung besteht darin, dass die wasserableitenden Profilrillen höchstens 40° zur Längsachse des Riemens geneigt sind, vorzugsweise höchstens 20° zur Längsachse des Riemens geneigt sind. Die Rillen sind damit so derart angeordnet, dass keine Ablaufneigung durch die Rückenstruktur erzeugt wird.

Eine weitere vorteilhafte Ausbildung besteht darin, dass der Antriebsriemen aus Ethylen-Propylen-Dien-Kautschuk (EPDM) oder Ethylen-Propylen-Kautschuk (EPM) besteht EPDM bzw EPM Mischungen sind wasserabweisend und zeichnen sich durch eine gute Wärmebeständigkeit aus..

Eine weitere vorteilhafte Ausbildung besteht darin, dass die rückenseitige Decklage eine Shore-Härte von 75 bis100 (Shore A), vorzugsweise eine Shore-Härte von 78 bis 86 aufweist. Elastomermischungen in diesem Härtebereich zeichnen sich durch eine gute Biegeflexibilität bei gleichzeitig gutem Abriebverhalten aus.

Eine weitere vorteilhafte Ausbildung besteht darin, dass der Antriebsriemen auf seiner Kraftübertragungsseite bzw. Antriebsseite als Keilriemen oder Keilrippenriemen ausgebildet ist. Solche Riemen übertragen größere Kräfte. Natürlich ist die Erfindung auch für andere Riemenformen, z.B. für Flachriemen geeignet.

Ein besonders vorteilhaftes Verfahren zur Herstellung eines erfindungsgemäßen Antriebsriemens ist ein Formverfahren, wobei die wasserableitenden Profilrillen von einer strukturierten Manschette während der Vulkanisation geformt werden. Beim Formverfahren wird die Decklagenmischungsplatte auf eine Trommel aufgelegt, die eine rotatorische Bewegung um ihre Mittelachse ausführt. Nachfolgend wird der Plattenstoß verquetscht, so dass die Trommel mit einem Rohgummimischungszylinder belegt ist. Anschließend werden ein oder mehrere Zugstränge parallel schneckenförmig auf die Decklage aufgespult. Danach wird die Unterbauplatte auf die Zugstrangebene gelegt. Anschließend kann der entstandenen Rohwickel auf der Außenseite auf dem Unterbau beschichtet werden. Elastische Textilbeschichtungen können von außen auf dem Unterbau aufgebracht werden. Der beschichtete Rohwickel wird in eine zylindrische Hohlform gestellt, die innen mit einem Negativ des Riemenprofils zur Kraftübertragung, d.h. mit dem Profil der Antriebsseite des Riemens versehen ist. Der Rohwickel wird während der Vulkanisation mittels einer innen eingesetzten zylindrischen Manschette mit Druck oder Heißdampf in die Hohlform gepresst, und die Form auf die Vulkanisationstemperatur zwischen 150 bis 190°C gebracht. Bei diesem Prozess werden dann auf der späteren Riemenrückseite auch die wasserableitenden Profilrillen von einer umgebenden strukturierten Manschette geformt. Die Gummimischungen werden vulkanisiert und die einzelnen Komponenten fest miteinander verbunden. Anschließend werden die einzelnen Riemen abgestochen.

Das Formverfahren hat im Vergleich zum Schleifverfahren zwei große Vorteile: Es entsteht sehr wenig Abfall, wodurch Ressourcen geschont werden, und es ermöglich spezielle Formungen, die mit dem sonst üblichen Schleifverfahren nicht möglich sind.

Anhand eines Ausführungsbeispieles soll die Erfindung näher erläutert werden. Es zeigen
- Fig. 1: einen Ausschnitt eines erfindungsgemäßen Antriebsriemens im Querschnitt
- Fig. 2: einen Antriebsriemen nach Fig 1. in der Draufsicht auf die Decklage

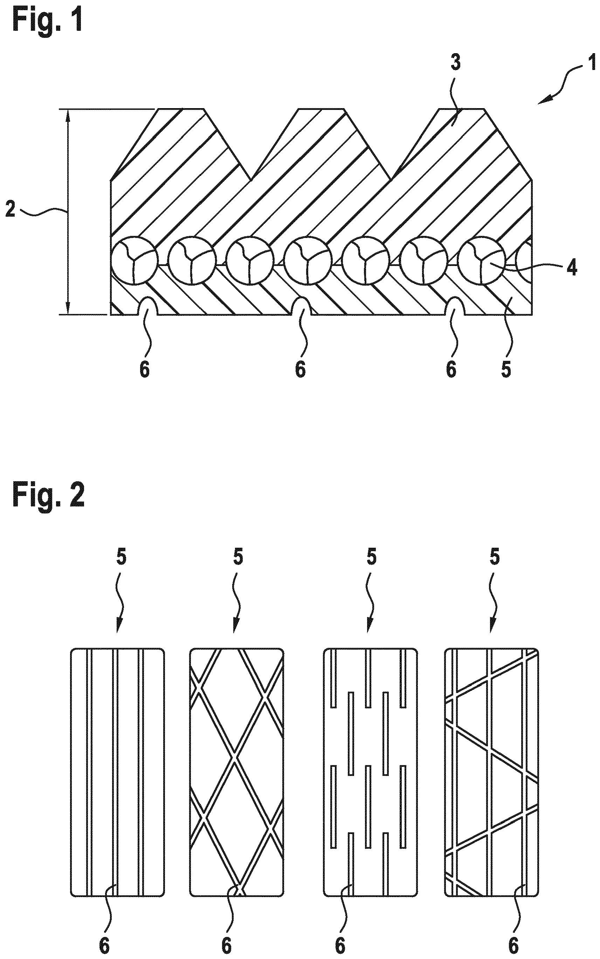

Die Fig. 1 zeigt einen Ausschnitt eines erfindungsgemäßen Keilrippenriemens 1 mit einer Riemenhöhe 2, einem Unterbau 3, einer Lage von Zugträgern 4 und einer Decklage 5. In der Decklage 5 auf dem Rücken des Antriebsriemens sind nach außen offene wasserableitende Profilrillen 6 ausgebildet, welche im Wesentlichen in Längsrichtung des als Keilrippenriemens ausgebildeten Antriebsriemens 1 ausgerichtet sind. Die wasserableitenden Profilrillen 6 weisen eine Tiefe von 0,5 mm auf.

Figur 2 zeigt einen Antriebsriemen nach Fig 1. in der Draufsicht auf die Decklage 5 mit jeweils verschiedenen Ausbildungen der wasserableitenden Profilrillen 6 und jeweils unterschiedlichen Winkelstellungen zur Längsrichtung des Antriebsriemens 1.

### Bezugszeichenliste

### (Teil der Beschreibung)

- 1: Keilrippenriemen
- 2: Riemenhöhe
- 3: Unterbau
- 4: Zugträger
- 5: Decklage
- 6: wasserableitende Profilrille

## Patentansprüche

1. Kraftübertragender Antriebsriemen (1) aus Elastomermaterial mit eingebetteten Zugträgern (4), einer ggf. profilierten und für die Kraftübertragung auf komplementär ausgeformte Riemenscheiben ausgebildeten Antriebsseite und einem der Antriebsseite gegenüberliegenden im Wesentlichen glatten Rücken, **dadurch gekennzeichnet, dass** der Rücken des Antriebsriemens mit wasserableitenden Profilrillen (6) ausgebildet ist, welche im Wesentlichen in Längsrichtung des Antriebsriemens (1) ausgerichtet sind und eine Tiefe zwischen 0,2 und 0,7 mm aufweisen.

2. Antriebsriemen nach Anspruch 1, bei dem die wasserableitenden Profilrillen (6) zwischen 5 und 30 % der Oberfläche des glatten Rückens einnehmen.

3. Antriebsriemen nach Anspruch 1 oder 2, bei dem die wasserableitenden Profilrillen (6) höchstens 40° zur Längsachse des Riemens geneigt sind, vorzugsweise höchstens 20° zur Längsachse des Riemens geneigt sind.

4. Antriebsriemen nach einem der Ansprüche 1 bis 3, bei dem die wasserableitenden Profilrillen (6) ein Verhältnis von Länge zu Breite von größer als 10, vorzugsweise größer als 20 aufweisen.

5. Antriebsriemen nach einem der Ansprüche 1 bis 4, bestehend aus Ethylen-Propylen-Dien-Kautschuk (EPDM) oder Ethylen-Propylen-Kautschuk (EPM).

6. Antriebsriemen nach einem der Ansprüche 1 bis 5, bei dem die rückenseitige Decklage eine Shore-Härte von 75 bis100 (Shore A), vorzugsweise eine Shore-Härte von 78 bis 86 aufweist.

7. Antriebsriemen nach einem der Ansprüche 1 bis 6, antriebsseitig ausgebildet als Keilriemen oder Keilrippenriemen.

8. Verfahren zur Herstellung eines Antriebsriemens nach einem der Ansprüche 1 bis 7, **dadurch gekennzeichnet, dass** der Antriebsriemen im Formverfahren hergestellt wird, wobei die wasserableitenden Profilrillen von einer strukturierten Manschette während der Vulkanisation geformt werden.

## Claims

1. Power-transmitting drive belt (1) from an elastomeric material, having embedded tension members (4), an optionally profiled drive side that is configured for the transmission of power to pulleys shaped in a complementary manner, and a substantially smooth back that lies opposite the drive side, **characterized in that** the back of the drive belt is configured having water-discharging profiled channels (6) which are aligned substantially in the longitudinal direction of the drive belt (1) and have a depth between 0.2 and 0.7 mm.

2. Drive belt according to Claim 1, wherein the water-discharging profiled channels (6) occupy between 5 and 30% of the surface of the smooth back.

3. Drive belt according to Claim 1 or 2, wherein the water-discharging profiled channels (6) are inclined by at most 40° in relation to the longitudinal axis of the belt, preferably are inclined by at most 20° in relation to the longitudinal axis of the belt.

4. Drive belt according to one of Claims 1 to 3, wherein the water-discharging profiled channels (6) have a length-to-width ratio of more than 10, preferably of more than 20.

5. Drive belt according to one of Claims 1 to 4, composed of ethylene propylene diene monomer rubber (EPDM) or ethylene propylene rubber (EPM).

6. Drive belt according to one of Claims 1 to 5, wherein the back-side cover tier has a Shore hardness from 75 to 100 (Shore A), preferably a Shore hardness from 78 to 86.

7. Drive belt according to one of Claims 1 to 6, on the drive side configured as a V-belt or a V-ribbed belt.

8. Method for producing a drive belt according to one of Claims 1 to 7, **characterized in that** the drive belt is produced by the moulding method, wherein the water-discharging profiled channels are moulded by a structured sleeve during vulcanizing.

## Revendications

1. Courroie de transmission de puissance (1) en matériau élastomère comprenant des supports de traction intégrés (4), un côté entraînement éventuellement profilé et conçu pour la transmission de puissance à des poulies de forme complémentaire et un dos sensiblement lisse opposé au côté entraînement, **caractérisée en ce que** le dos de la courroie de transmission est formé avec des rainures profilées (6) d'évacuation de l'eau qui sont orientées sensiblement dans la direction longitudinale de la courroie de transmission (1) et qui ont une profondeur comprise entre 0,2 et 0,7 mm.

2. Courroie de transmission selon la revendication 1, dans laquelle les rainures profilées (6) d'évacuation de l'eau occupent entre 5 et 30 % de la surface du dos lisse.

3. Courroie de transmission selon la revendication 1 ou 2, dans laquelle les rainures profilées (6) d'évacuation de l'eau sont inclinées de 40° maximum par rapport à l'axe longitudinal de la courroie, de préférence de 20° maximum par rapport à l'axe longitudinal de la courroie.

4. Courroie d'entraînement selon l'une des revendications 1 à 3, dans laquelle les rainures profilées (6) d'évacuation de l'eau ont un rapport longueur sur largeur supérieur à 10, de préférence supérieur à 20.

5. Courroie d'entraînement selon l'une des revendications 1 à 4, comprenant un caoutchouc éthylène-propylène-diène (EPDM) ou un caoutchouc éthylène-propylène (EPM).

6. Courroie d'entraînement selon l'une des revendications 1 à 5, dans laquelle la couche de recouvrement côté dos présente une dureté Shore de 75 à 100 (Shore A), de préférence une dureté Shore de 78 à 86.

7. Courroie d'entraînement selon l'une des revendications 1 à 6, conçue du côté entraînement sous la forme d'une courroie trapézoïdale ou d'une courroie trapézoïdale striée.

8. Procédé de fabrication d'une courroie de transmission selon l'une quelconque des revendications 1 à 7, **caractérisé en ce que** la courroie de transmission est réalisée par le procédé de moulage, les rainures profilées d'évacuation de l'eau étant formées par un manchon structuré lors de la vulcanisation.
